# EUROPÄISCHE PATENTSCHRIFT

(11) **EP 0 968 847 B1**
(45) Veröffentlichungstag und Bekanntmachung des Hinweises auf die Patenterteilung: **16.11.2005**
(21) Anmeldenummer: 99112344.9
(22) Anmeldetag: 28.06.1999
(51) Int. Cl.: B60C 11/11, B60C 11/12, B60C 11/04, B60C 11/13

(54) **Fahrzeugreifen**
Vehicle tyre
Bandage pneumatique pour véhicule

(30) Priorität: 01.07.1998 DE 19829038
(43) Veröffentlichungstag der Anmeldung: 05.01.2000
(73) Patentinhaber: Continental Aktiengesellschaft, 30165 Hannover (DE)
(72) Erfinder: Peschel, Wolfgang, 85521 Ottobrunn (DE); Diensthuber, Franz, 30559 Hannover (DE)

(56) Entgegenhaltungen:
- EP-A- 0 194 069
- EP-A- 0 691 222
- EP-A- 0 718 125
- FR-A- 2 483 332
- US-A- 4 299 264
- US-A- 4 641 695
- PATENT ABSTRACTS OF JAPAN vol. 1997, no. 03, 31. März 1997 (1997-03-31) & JP 08 295104 A (BRIDGESTONE CORP), 12. November 1996 (1996-11-12)
- PATENT ABSTRACTS OF JAPAN vol. 013, no. 237 (M-833), 5. Juni 1989 (1989-06-05) & JP 01 047603 A (TOYO TIRE & RUBBER CO LTD), 22. Februar 1989 (1989-02-22)

## Beschreibung

Die Erfindung betrifft einen Fahrzeugreifen, insbesondere für den Einsatz unter winterlichen Fahrbedingungen, mit einem Laufstreifenprofil, welches durch Quernuten und durch Umfangsnuten in Profilelemente, wie Blöcke von Blockreihen und in Umfangsrichtung umlaufende Rippen, gegliedert ist, von welchen Profilelementen zumindest einige, vorzugsweise sämtliche, ein Netz aus Einschnitten aufweisen, die im Profilelementinneren bienenwabenförmig angeordnet sind, also in Draufsicht als aneinander anschließende, zumindest im Wesentlichen regelmäßige Sechsecke erscheinen, wobei zumindest zu den von Umfangsnuten begrenzten Randbereichen und zumindest im Wesentlichen in Fortsetzung der Wabenstruktur aus dem Profilelementinneren Einschnitte verlaufen, die gemeinsam mit Nuten Randelemente bilden.

Fahrzeugluftreifen mit Laufreifenprofilen, die insbesondere für den Einsatz unter winterlichen Fahrbedingungen geeignet sind und daher mit Profilelementen versehen sind, die eine Vielzahl von Einschnitten aufweisen, sind in den unterschiedlichsten Ausführungsvarianten bekannt. Dabei befasst sich auch eine Vielzahl von Patentanmeldungen und Patenten mit solchen Fahrzeugluftreifen.

Ein Fahrzeugluftreifen gemäß dem Oberbegriff des Anspruches 1 ist beispielsweise aus der EP 0 718 125 A1 bekannt. Im mittleren Bereich der Profilblöcke sind Einschnitte in Form einer Wabenstruktur angeordnet, wobei lediglich zu den seitlichen Bereichen der Blöcke, zu den Umfangsnuten, zickzackförmig verlaufende Einschnitte vorgesehen sind.

Das aus der EP 0 485 883 A1 bekannte Laufstreifenprofil ist laufrichtungsgebunden gestaltet und besitzt vier Blockreihen, deren Blöcke im Wesentlichen parallelogrammförmig gestaltet sind. Die in den einzelnen Blöcken angeordneten Einschnitte besitzen eine besonderen Verlauf, indem sie derart bezüglich der Abrollrichtung des Reifens angeordnet werden, dass sie erste Abschnitte besitzen, mit denen sie auch beim Abrollen des Reifens zuerst in die Kontaktfläche mit dem Untergrund eintreten. Die an diese ersten Abschnitte anschließenden weiteren Abschnitte der Einschnitte treten jeweils einer nach dem anderen in die Kontaktfläche mit dem Untergrund ein. Ein Reifen mit einem derart gestalteten Laufstreifenprofil soll gute Brems- und Lenkeigenschaften auf nassen Fahrbahnen sowie einen geringen und regelmäßigen Abrieb besitzen.

Um die Biegesteifigkeit bzw. die Stabilität eines Laufstreifenprofiles für einen Winterreifen zu verbessern, ist weiters in der EP 0 609 195 A1 vorgeschlagen worden, bei einem ebenfalls laufrichtungsgebunden gestalteten Laufstreifenprofil die Umfangsnuten, die die einander benachbarten Querrillen miteinander verbinden, jeweils in einen breiten und einen schmalen Nutabschnitt zu teilen, wobei die schmalen Nutabschnitte jene sein sollen, die beim Abrollen des Reifens zuerst in die Kontaktfläche mit dem Untergrund eintreten.

Bei dem aus der DE 43 00 695 A1 bekannten Laufstreifenprofil, durch welches sowohl das Aquaplaningverhalten als auch die Winterfahreigenschaften verbessert werden sollen, sind im Profilmittelbereich Profilblöcke innerhalb einer Blockreihe derart angeordnet, dass sie durch Schrägnuten voneinander getrennt sind, die aus zwei winkelig verlaufenden, sich in der Mittenumfangsebene treffenden Nutabschnitten bestehen.

Was die Einschnittausgestaltung betrifft, so sind bei dem aus der bereits genannten EP 0 609 195 A1 bekannten Laufstreifenprofil Einschnitte mit zickzackfömigem bzw. treppenförmigem Verlauf vorgesehen, die innerhalb jedes Profilelementes zumindest im Wesentlichen parallel zueinander verlaufen. Gemeinsam mit schmalen, Abschnitte der Einschnitte überdeckenden Entlüftungsnuten entsteht in den Profilelementen ein Netzwerk von Einschnitten.

Die Blöcke des aus der DE 43 00 695 A1 bekannten Laufstreifenprofiles besitzen ebenfalls jeweils eine Anzahl von innerhalb jedes Blockes parallel verlaufenden und zickzackförmig gestalteten Einschnitten, wie sie bei Laufstreifenprofilen für Winterreifen oft üblich sind.

Daneben wurden jedoch auch bereits abweichend gestaltete Einschnitte für Laufstreifenprofile von Winterreifen vorgeschlagen. Eine derartige Einschnittausgestaltung ist beispielsweise aus der EP 0 691 222 A2, wo auch ein Fahrzeugreifen gemäß dem Oberbegriff des Anspruches 1 geoffenbart ist, bekannt. In dieser Druckschrift wurde erstmals vorgeschlagen, zur gezielten Beeinflussung der Biegesteifigkeit der Profilelemente eines Laufstreifenprofiles die Profilelemente mit einem Einschnittnetz zu versehen, welches aus regelmäßigen oder im Wesentlichen regelmäßigen Sechsecken und damit aus einer Wabenstruktur besteht. Das derart gestaltete Netz aus Einschnitten überzieht einen Großteil des Profilblockes und kann an den durch Umfangsnuten begrenzten Blockrandbereichen durch Einschnitte, die quasi in Fortsetzung der Wabenelemente angeordnet sind, bis zu den Umfangsnuten reichen.

Es lassen sich nun die bekannten Laufstreifenprofile für Winterreifen, was die Anordung und Ausgestaltung von in den Profilelementen vorgesehenen und eine Wabenstruktur aufweisenden Einschnitten betrifft, verbessern bzw. optimieren.

Der gegenständlichen Erfindung liegt daher die Aufgabe zugrunde, einen Fahrzeugreifen der eingangs genannten Art gegenüber den bekannten Ausführungen bezüglich der Winterfahreigenschaften, insbesondere was Schnee- und Eisgriff betrifft, durch eine Optimierung der Einschnittstrukturierung der Profilelemente zu verbessern.

Diese Aufgabe wird erfindungsgemäß dadurch gelöst, dass Profilelemente vom Einschnittnetz komplett überzogen sind, indem von sämtlichen Ecken der im inneren Bereich des Profilelementes angeordneten Wabenelementen zu sämtlichen von Nuten begrenzten Randbereichen geradlinig Einschnitte verlaufen, wobei die gemeinsam mit den Nuten gebildeten Randelemente eine durchschnittliche Fläche aufweisen, deren Größe zwischen 105 und 140 % der durchschnittlichen Größe der Fläche der im Innenbereich des jeweiligen Profilelementes angeordneten Wabenelemente beträgt.

Durch die erfindungsgemäße Ausgestaltung wird die Wabenstruktur über die gesamte Fläche der Profilelemente ausgedehnt, wobei durch die durchschnittlich größere Fläche der Randelemente die für ein optimales Handling erforderliche Versteifung an den Randbereichen gewährleistet ist. Dabei können die Vorteile der Wabenstruktur, Optimierung des Schnee- und Eisgriffes durch größtmöglichen Strukturfaktor (Summe der Einschnittlängen des gesamten Profils, projiziert auf die Reifenquerrichtung), weiter optimiert und auf die gesamte Profilelementfläche ausgedehnt werden. Dabei ist es günstig, wenn die durchschnittliche Größe der Fläche der Randelemente zwischen 105 und 140 % der durchschnittlichen Größe der Fläche der Wabenelemente beträgt. Gerade innerhalb dieses Bereiches liegt ein für die Steifigkeit der Profilelemente günstiges Verhältnis der Flächen von Randelementen und Wabenelementen vor.

Die Ausgestaltung des Laufstreifenprofils ist mit weiteren erfindungsgemäßen Weiterentwicklungen und Merkmalen verbunden.

Für einen gleichmäßigen Abrieb ist es ferner von Vorteil, wenn die zu den Randbereichen verlaufenden Einschnitte zumindest im Wesentlichen orthogonal zu den angrenzenden Nuten verlaufen bzw. einen um höchstens 20° von der Orthogonalen auf die angrenzenden Nuten abweichenden Verlauf aufweisen.

Um die durch die Wabenstruktur erzielbare Ausgewogenheit des Steifigkeitsverhaltens der Profilelemente zu erhalten, ist es ferner von Vorteil, wenn die zu den Randbereichen verlaufenden Einschnitte in ihrer Ausrichtung um höchstens 15° von der exakten Fortsetzung der Wabenstruktur abweichen.

Die Einschnittstruktur wird ferner bevorzugt derart ausgelegt, dass die in einem Profilelement zu den Randbereichen verlaufenden Einschnitte eine durchschnittliche Länge besitzen, die zumindest der durchschnittlichen Kantenlänge, insbesondere zwischen 110 bis 230 % der durchschnittlichen Kantenlänge, der Wabenelemente dieses Profilelementes entspricht. Durch diese Maßnahme wird einerseits die erwünschte Erzielung einer größeren Fläche für die Randelemente unterstützt und andererseits auch ein für den Abrieb günstiger Abstand der Wabenelemente von den Rändern der Profilelemente gewährleistet.

Um einen möglichst optimalen Strukturfaktor und damit beispielsweise eine sehr gute Schneetraktion sicherzustellen, ist es ferner günstig, wenn von den drei Scharen von zickzackförmigen Einschnittzügen, die durch die Waben- und die Randelemente gebildet werden, eine Schar eine Erstreckungsrichtung besitzt, die der Axialen möglichst nahe kommt und dabei von der Axialen um höchstens 30° abweicht.

Auch die gewählte Einschnitttiefe hat auf die Fahreigenschaften unter winterlichen Fahrbedingungen, wie Schnee oder Eis, Einfluss. In diesem Zusammenhang ist es von Vorteil, wenn jene Einschnittzüge, deren Erstreckungsrichtung der Axialen am nächsten kommt, eine größere Einschnitttiefe aufweisen als jene Einschnitte aus den beiden anderen Scharen von Einschnittzügen, die nicht gleichzeitig Einschnitte aus der erstgenannten Schar von Einschnittzügen sind.

Dabei sollte die durchschnittliche Tiefe der Einschnittzüge, deren Erstreckungsrichtung der Axialen am nächsten kommt - unbeschadet eventueller Grundanhebungen in der Nähe ihrer Ränder - zwischen 60 und 105 %, insbesondere mindestens 80 %, der maximalen Tiefe der Nuten betragen.

Was die durchschnittliche Tiefe jener Einschnitte aus den beiden anderen Scharen von Einschnittzügen, die nicht gleichzeitig Einschnitte aus der Schar von Einschnittzügen, deren Erstreckungsrichtung der Axialen am nächsten kommt, sind, betrifft, so sollte deren Tiefe - unbeschadet eventueller Grundanhebungen in der Näher ihrer Ränder - 10 bis 60 % der maximalen Tiefe der Nuten betragen.

Weitere Merkmale, Vorteile und Einzelheiten der Erfindung werden nun anhand der Zeichnung, die ein Ausführungsbeispiel darstellt, näher beschrieben. Dabei zeigt Fig. 1 schematisch eine Schrägansicht eines erfindungsgemäß ausgeführten Reifens, Fig. 2 eine Draufsicht auf eine Teilabwicklung eines gemäß der Erfindung gestalteten Laufstreifenprofiles und Fig. 3 in einem vergrößerten Ausschnitt eine Draufsicht auf mehrere Profilblöcke dieses Laufstreifenprofiles.

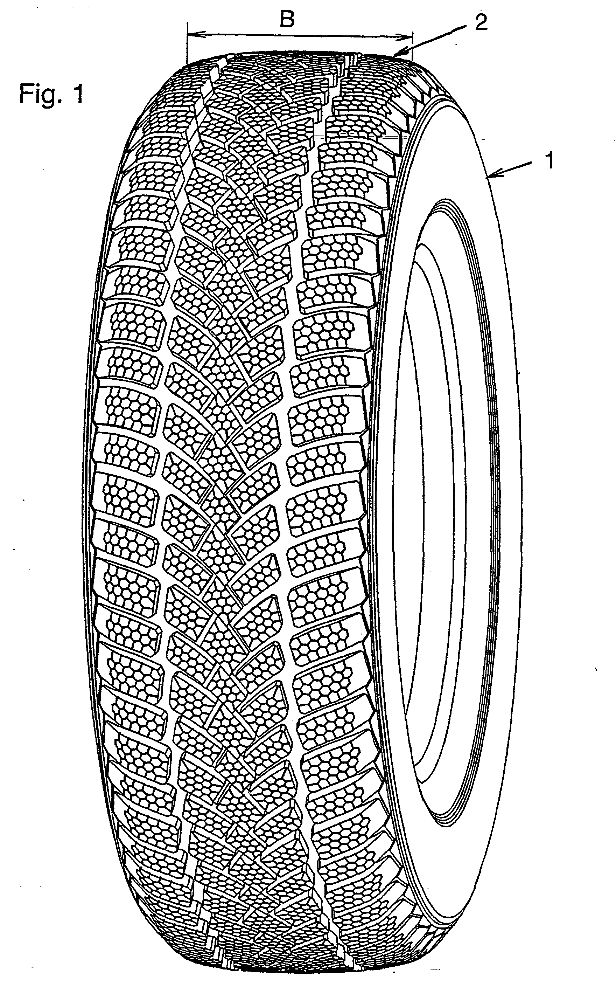

Der in Fig. 1 dargestellte Fahrzeugreifen 1 ist insbesondere als Radialreifen ausgeführt und vorzugsweise ein PKW-Reifen oder ein Reifen für leichte Nutzfahrzeuge. Der Fahrzeugreifen 1 ist mit einem Laufstreifenprofil 2 versehen, welches für den Einsatz unter winterlichen Fahrbedingungen besonders geeignet ist. In der nun folgenden Beschreibung wird dabei das Laufstreifenprofil 2 über seine Breite B betrachtet, die der Latschbreite und somit der Breite der Bodenaufstandsfläche des Reifens (gemäß E.T.R.T.O. Standards) entspricht.

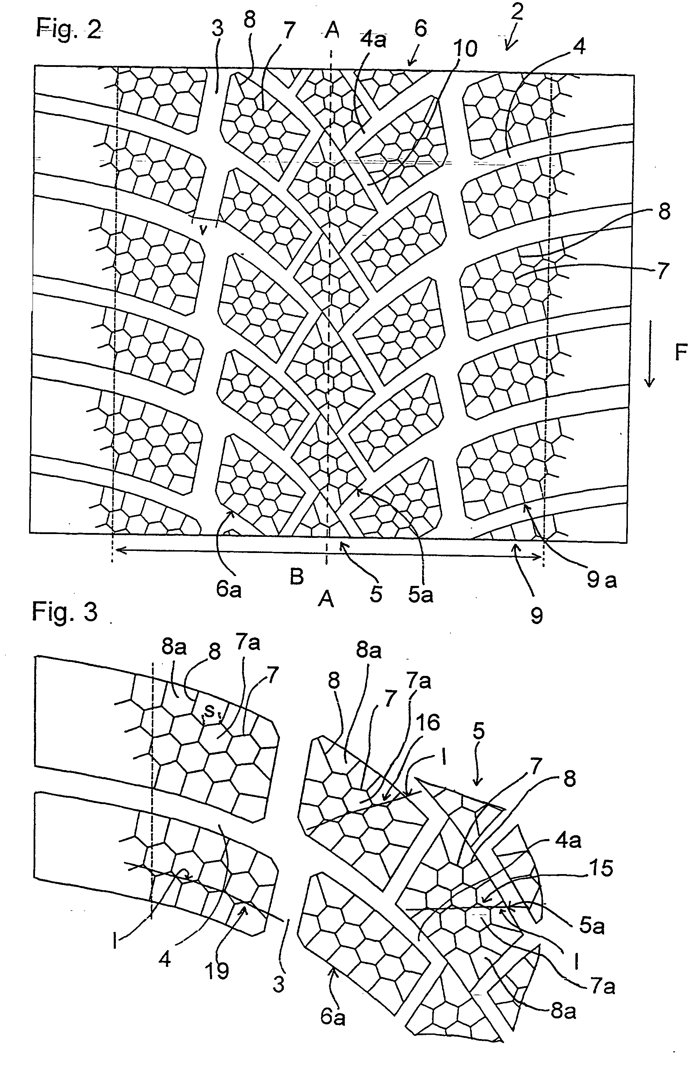

Bei dem in Fig. 2 dargestellten Laufstreifenprofil 2 handelt es sich um ein laufrichtungsgebunden gestaltetes Profil. Das heißt, dass Reifen mit diesem Profil eine bevorzugte Abrollrichtung besitzen, die in Fig. 1 durch den Pfeil F angedeutet ist, und dass solche Reifen daher auch entsprechend ihrer Abrollrichtung am Fahrzeug zu montieren sind.

Sowohl das Laufstreifenprofil 2 an sich als auch die besondere und weiter unten noch ausführlicher beschriebene Einschnittausgestaltung und -anordnung sind neu, wobei letztere nicht auf das dargestellte Laufreifenprofil und auch nicht auf laufrichtungsgebunden gestaltete Laufstreifenprofile eingeschränkt ist.

Vorerst wird auf die Ausgestaltung des Profils 2 an sich näher eingegangen.

Das Laufstreifenprofil 2 setzt sich aus einer entlang des Reifenäquators, welcher durch die Linie A-A in Fig. 1 verdeutlicht ist, verlaufenden Mittelrippe 5, je einer an diese anschließenden Blockreihe 6 und laufstreifenaußenseitig noch je einer Schulterblockreihe 9 zusammen. Die Mittelrippe 5 besitzt eine besondere Struktur, die sich aus der Ausgestaltung und Anordnung der sie von den beiden benachbarten Blockreihen 6 trennenden und ausgeprägt zick-zack-förmig verlaufenden Umfangsnuten, die sich jeweils abwechselnd aus Nutabschnitten 4a und Nuten 10 zusammensetzen, ergibt. Die Nutabschnitte 4a sind dabei die axial inneren Endabschnitte von Quernuten 4, die, über ihren gesamten Verlauf gesehen, leicht bogenförmig gekrümmt sind und durch ihre Anordnung in den beiden Laufstreifenhälften die laufrichtungsgebundene und gepfeilte Gestalt des Profils 2 bestimmen. Durch die Nuten 10 wird zwischen den jeweils in Umfangsrichtung benachbarten Nutabschnitten 4a der Quernuten 4 eine Verbindung zwischen dem axial inneren Ende des einen Nutabschnittes 4a und dem axial äußeren Ende des benachbarten Nutabschnittes 4a geschaffen.

Die Nutabschnitte 4a bilden mit der Reifenumfangsrichtung (Äquatorlinie A-A) einen Winkel α von 40 bis 60°, die Nuten 10 schließen einen Winkel β mit der Umfangsrichtung ein, der zwischen 135 bis 155° beträgt. Durch die laufrichtungsgebundene, gepfeilte Ausgestaltung sind die in der einen Laufstreifenhälfte verlaufenden Nuten 10 und Quernuten 4 gegensinnig zu jenen, die in der anderen Laufstreifenhälfte verlaufen, geneigt.

Der Verlauf der Quernuten 4 zu den Laufstreifenrändern zu ist ferner so gewählt, dass die Quernuten 4 einerseits zu den Laufstreifenrändern zu kontinuierlich breiter werden und andererseits kontinuierlich ihren Winkel gegenüber der Äquatorlinie A-A vergrößern, so dass an den Laufstreifenrändern ein Winkel γ einer Größenordnung von 70 bis 80° mit der Äquatorlinie A-A eingeschlossen wird.

Zwischen den beiden Schulterblockreihen 9 und den Blockreihen 6 sind ferner relativ breit ausgeführte Längsrillen 3 vorgesehen, die, dort wo sie die Blöcke 6a und 9a der Blockreihen 6 und 9 begrenzen, gegenüber der Äquatorlinie A-A unter einem kleinen spitzen Winkel verlaufende Abschnitte bilden, so dass die von den Längsrillen 3 begrenzten Blockkanten gleichermaßen geneigt bzw. schräg verlaufen.

Wie erwähnt wird die Mittelrippe 5 beidseitig durch eine zickzackförmig verlaufende Nut - abwechselnd aus Nutabschnitten 4a und Nuten 10 bestehend - begrenzt. Dabei ist nun die gegenseitige Anordnung der in der einen Laufstreifenhälfte verlaufenden Nutabschnitte 4a und Nuten 10 zu den in der anderen Laufstreifenhälfte verlaufenden Nutabschnitten 4a und Nuten 10 so getroffen, dass sich die Mittelrippe 5 aus aneinandergereihten, in Draufsicht im Wesentlichen rechteck- bzw. parallelogrammförmigen Rippenteilen 5a zusammensetzt, die jeweils an den Endbereichen ihrer längeren Kanten zusammenhängen. Durch die beschriebene Schrägstellung der Nutabschnitte 4a und der Nuten 10 sind diese Rippenteile 5a gegenüber der Umfangsrichtung (Äquatorlinie A-A) deutlich schräg gestellt.

Aufgrund der geschilderten Zusammensetzung der Mittelrippe 5 aus im Wesentlichen rechteck- bzw. parallelogrammförmigen Rippenteilen 5a liegt eine Struktur vor, bei der eine in Reifenquerrichtung stark schwankende Rippenbreite gegeben ist. Die in axialer Richtung gemessene Breite der Mittelrippe 5 schwankt von 5% der Breite B an der schmalsten Stelle bis zu 20 % B an der breitesten Stelle. Dies hat im Laufstreifenmittelbereich eine Profilbeweglichkeit zur Folge, die ein Öffnen und Schließen und auch ein gegenseitiges Abstützen der Feineinschnitte 7, 8 innerhalb der Mittelrippe 5 zulässt, was für den Schneegriff und den Eisgriff von besonderem Vorteil ist. Die "Aufweichung" durch die Breitenschwankungen im Bereich der Mittelrippe 5 ist, da nach wie vor eine in Umfangsrichtung geschlossene Struktur vorliegt, jedoch nicht so groß, dass dadurch das Seitenführungsverhalten des Profils beeinflusst würde.

Die Blöcke 6a der Blockreihen 6 besitzen aufgrund der geschilderten Schrägstellung bzw. des geschilderten Verlaufes der sie begrenzenden Nuten - Nuten 4 und 10 sowie die schräg gestellten Abschnitte der Umfangsnuten 3 - die Gestalt unregelmäßiger Vierecke.

Eine weitere Besonderheit des Laufstreifenprofils 2 ist aus Fig. 2 ersichtlich. Die Blöcke 6a, 9a der Blockreihen 6, 9 sind nämlich derart ausgerichtet, dass die Verbindungslinie v zwischen den durch den Verlauf der Quernuten 4 einander zugeordneten und zugewandten theoretischen Eckpunkten - diese entstehen durch eine Fortsetzung der Blockkanten über die Abschrägungen an den Eckbereichen - entweder exakt in Querrichtung (in der Axialen) verläuft oder um bis zu 5°, insbesondere um bis zu 1°, von dieser abweicht. Durch diese Maßnahme wird das gegenständliche Laufstreifenprofil im Aquaplaningverhalten optimiert

Um das Reifen/Fahrbahngeräusch günstig zu beeinflussen, ist dieses Laufstreifenprofil 2, so wie es im allgemeinen bei Laufstreifenprofilen üblich ist, nach dem Verfahren der Pitchlängenvariation optimiert. Als Pitch wird dabei ein sich über den Reifenumfang wiederholender Profilabschnitt bezeichnet, wobei es üblich ist, bei einem Reifen zwischen zwei und fünf Pitches in unterschiedlichen Längen zu wählen und die Art der Aufeinanderfolge dieser unterschiedlich langen Pitches über den Reifenumfang mittels eines Rechnerprogrammes zu ermitteln. Beim dargestellten Profil 2 umfasst ein einzelner Pitch jeweils einen der in Querrichtung benachbarte Blöcke 6a, 9a aus den beiden Blockreihen 6, 9 mit einer der benachbarten Quernuten 4. Aus Fig. 1 sind die unterschiedlichen Umfangslängen, die unterschiedlich langen Pitches, leicht erkennbar.

Sämtliche Profilelemente, diese umfassen die Profilpositive und demnach die Blöcke 6a, 9a sowie die Mittelrippe 5, sind durch eine Vielzahl von Einschnitten 7,8 strukturiert, die als Einschnittgitter die Profilelemente überziehen. Diese Einschnitte 7, 8 werden in einer Breite, die zwischen 0,3 und 0,8mm gewählt wird, ausgeführt. Die Strukturierung durch die Einschnitte 7, 8 ist dabei so vorgenommen, dass im Mittelbereich der Profilelemente, der Blöcke 6a, 9a und der Mittelrippe 5, die Einschnitte 7 bienenwabenförmige Elemente 7a umschließen und somit, in Draufsicht betrachtet, als aneinander anschließende bzw. aneinandergereihte, zumindest im Wesentlichen regelmäßige Sechsecke erscheinen. In jedem der genannten Profilelemente, sei es ein Block 6a, 9a oder ein Rippenteil 5a aus der Mittelrippe 5, ist zumindest eine Reihe aus einer Anzahl von solchen durch bienenwabenförmig angeordnete Einschnitte 7 gebildete Elemente 7a vorgesehen, die zumindest im Wesentlichen parallel zu den von Quernuten 4 begrenzten Block- bzw. Rippenkanten verlaufen.

Das durch die Einschnitte 7, 8 gebildete Gitter erstreckt sich nun, zumindest in jenem Bereich des Laufstreifens, wo dieses unter normalen Betriebsbedingungen in Kontakt mit dem Untergrund tritt, über die gesamte Oberfläche der einzelnen Profilelemente, indem von den Ecken der im Profilelementinneren angeordneten kompletten Wabenelemente 7a geradlinig bzw. etwa geradlinig verlaufende Einschnitte 8, quasi in Fortsetzung bzw. im Wesentlichen in Fortsetzung der Wabenstruktur, zu den Kanten der Profilelemente verlaufen und dort in die Nuten - Umfangsnuten 3, Quernuten 4 und Nuten 10 - einmünden. Die Einschnitte 8 bilden gemeinsam mit Einschnitten 7 und den erwähnten Nuten Randelemente 8a, die keine Wabenform besitzen, sondern überwiegend Fünfecke, manche auch Vierecke sind.

Infolge der Ausrichtung der Reihe(n) von wabenförmigen Elementen 7a verlaufen diese Einschnitte 8 derart, dass sie dort, wo sie in Quernuten 4 münden, unter einem rechten oder einem nahezu rechten Winkel an den Randbereichen des jeweiligen Profilelementes einmünden.

Es gibt jedoch auch Einschnitte 8, die nicht orthogonal in eine angrenzende Nut einmünden. Dies ist beim vorliegenden Ausführungsbeispiel bei Einschnitten 8 der Fall, die in eine der Umfangsnuten 3 oder in eine der Nuten 10 münden. Hier wird von der Ausgestaltung der Profilelemente und der Anordnung der Einschnitte 7, 8 darauf geachtet, dass diese Einschnitte 8 unter einem Winkel einmünden, der höchstens um 20° von der exakten Orthogonalen abweicht. An Eckbereichen von Profilelementen werden diese mit Abschrägungen - schräg abgeschnittenen Eckbereichen - versehen, so dass bei dort endenden Einschnitten 8 entweder die erwähnte Abweichung (bis 20°) oder gar keine Abweichung der Einmündungsstellen von der Orthogonalen vorliegt.

Eine etwaige Abweichung von der erwähnten Fortsetzung der Wabenstruktur durch die zu den und in den Randbereichen der Profilelemente verlaufenden Einschnitte 8 wird insbesondere so gewählt, dass die sich ergebende Orientierung um höchstens 15° von der Fortsetzung der Wabenstruktur abweichen.

Die im mittleren Bereich der einzelnen Profilelemente angeordneten, die Kanten der Elemente 7a bildenden Einschnitte 7 besitzen eine durchschnittliche Kantenlänge s, wobei die zu den Randbereichen des jeweiligen Profilelementes zu verlaufenden Einschnitte 8 eine Länge besitzen, die zumindest der durchschnittlichen Kantenlänge s entspricht, im allgemeinen jedoch zwischen 110 bis 230 % der durchschnittlichen Kantenlänge s beträgt.

Die Einschnittausgestaltung mit den Einschnitten 7, 8 wird ferner derart getroffen, dass in jedem Profilelement die überwiegende Anzahl der Randelemente 8a eine Oberfläche besitzt, die größer ist als die von den wabenförmigen Elementen 7a im Profilelementinneren jeweils eingenommene Fläche. Die durchschnittliche Größe der Randelemente 8a liegt in einer Größenordnung von 105 bis140 % der durchschnittlichen Größe der Elemente 7a innerhalb des jeweiligen Profilelementes. Dies bedingt eine Versteifung der Profilelementränder, was für das Fahrverhalten von Vorteil ist.

Durch die erfindungsgemäße Einschnittstruktur werden in jedem Profilelement zumindest zwei zickzackförmig verlaufende Einschnittzüge 15, 16 und 19 gebildet, deren Erstreckungsrichtung von der Ausrichtung der oben beschriebenen Wabenreihen abweichen kann. In Fig. 2 ist die Erstreckungsrichtung der Einschnittzüge 15 in der Mittelrippe 5, der Einschnittzüge 16 in den Blöcken 6a und der Einschnittzüge 19 in den Blöcken 9a durch je eine, je einen der Einschnittzüge 15, 16, 19 durchsetzende Linie l versinnbildlicht, die jeweils einen Winkel mit der Reifenquerrichtung einschließt, der relativ klein ist und in jedem Fall ≤ 30°, insbesondere ≤25°, betragen sollte. Diese Ausrichtung der Einschnittzüge 15, 16, 19 in Bezug auf die Reifenquerrichtung ist besonders vorteilhaft bezüglich des Strukturfaktors in dieser Richtung und trägt vor allem zu einer sehr guten Schneetraktion bei.

In den Blöcken 9a der Schulterblockreihen 9 sind die Einschnittzüge 19, bedingt durch die Ausrichtung der Blöcke 9a, in Übereinstimmung mit der Erstreckung der Reihe(n) von Wabenelementen 7a orientiert.

In jedem Profilelement weist jedes Einschnittgitter aber nicht nur die geschilderten, um maximal 30° bezüglich ihrer Erstreckungsrichtung von der Reifenquerrichtung abweichenden Einschnittzüge 15, 16, 19 auf, sondern, bedingt durch die Wabenstruktur, je zwei weitere Scharen von Einschnittzügen. Deren Erstreckungsrichtung schließt jeweils mit der Erstreckungsrichtung der beschriebenen Einschnittzüge 15, 16, 19 einen Winkel von etwa 60° bzw. etwa 120° ein.

Die einzelnen Einschnitte 7, 8 jener Schar von Einschnittzügen 15, 16, 19, deren Erstreckungsrichtung, wie oben beschrieben, der axialen Richtung am nächsten kommt, werden im Allgemeinen - unbeschadet etwaiger Grundanhebungen im Bereich ihrer Ränder - mit einer größeren Einschnitttiefe ausgeführt, als Einschnitte, die zu den anderen Scharen von Einschnittzügen gehören. Dabei ist zu beachten, dass es aufgrund der Wabenstruktur Überlappungen gibt, da Einschnitte aus Einschnittzügen der einen Schar auch gleichzeitig Einschnitte von Einschnittzügen einer der anderen Scharen sind. Wesentlich ist jedoch, dass die mittlere Einschnitttiefe der, wie oben beschrieben, mit größerer Tiefe ausgeführten Einschnittzüge eine Einschnitttiefe - unbeschadet eventueller Grundanhebungen im Bereich ihrer Ränder - aufweisen, die 60 bis 105 %, insbesondere 80 bis 105 %, der maximalen Tiefe der Profilrillen beträgt.

Jene Einschnitte aus den anderen Scharen von Einschnittzügen, die nicht gleichzeitig auch Einschnitte der mit größeren Tiefe ausgeführten Einschnittzüge sind, besitzen bevorzugt eine mittlere Einschnitttiefe von 10 bis 60 % der Profiltiefe.

Die geschilderte Struktur des Einschnittgitters ist für die Wintereigenschaften des Laufstreifenprofiles von besonderer Bedeutung. So hat sich insbesondere herausgestellt, dass diese Struktur deutlich zu einer Verbesserung des Schnee- und Eisgriffes beiträgt.

Es ist jedoch auch die sonstige Ausgestaltung des Profils von nicht unerheblicher Bedeutung. So hat insbesondere die spezielle Gestaltung der Mittelrippe 5 einen sehr positiven Einfluss auf die Traktion des Laufstreifenprofils und das Bremsverhalten auf Schnee. Dabei sei darauf hingewiesen, dass zwar die Kombination der besonders gestalteten Mittelrippe 5 mit erfindungsgemäß ausgeführten Einschnitten 7, 8 besonders vorteilhaft ist, aber die Mittelrippe 5 auch in Kombination mit anders gestalteten Einschnitten, beispielsweise herkömmlich zickzackförmigen und im Wesentlichen in Reifenquerrichtung orientierten Einschnitten, die bereits erwähnten Vorteile besitzt.

## Patentansprüche

1. Fahrzeugreifen, insbesondere für den Einsatz unter winterlichen Fahrbedingungen mit einem Laufstreifenprofil, welches durch Quernuten (4) und durch Umfangsnuten (3, 10) in Profilelemente, wie Blöcke von Blockreihen und in Umfangsrichtung umlaufende Rippen, gegliedert ist, von welchen Profilelementen zumindest einige, vorzugsweise sämtliche, ein Netz aus Einschnitten aufweisen, die im Profilelementinneren bienenwabenförmig angeordnet sind, also in Draufsicht als aneinander anschließende, zumindest im Wesentlichen regelmäßige Sechsecke erscheinen, wobei zumindest zu den von Umfangsnuten begrenzten Randbereichen und zumindest im Wesentlichen in Fortsetzung der Wabenstruktur aus dem Profilelementinneren Einschnitte verlaufen, die gemeinsam mit Nuten Randelemente bilden,
**dadurch gekennzeichnet,**
**dass** Profilelemente (5, 6, 9) vom Einschnittnetz komplett überzogen sind, indem von sämtliche Ecken der im inneren Bereich des Profilelementes (5, 6, 9) angeordneten Wabenelemente (8a) zu sämtlichen von Nuten (3, 4, 10) begrenzten Randbereichen geradlinig Einschnitte (8) verlaufen, wobei die gemeinsam mit den Nuten (3, 4, 10) gebildeten Randelemente (8a) eine durchschnittliche Fläche aufweisen, deren Größe zwischen 105 % und 140 % der durchschnittlichen Größe der Fläche im inneren Bereich des jeweiligen Profilelementes (5, 6, 9) angeordneten Wabenelemente (7a) beträgt.

2. Fahrzeugreifen nach Anspruch 1, **dadurch gekennzeichnet, dass** die zu den Randbereichen verlaufenden Einschnitte (8) zumindest im Wesentlichen orthogonal zu den angrenzenden Nuten (3, 4, 10) verlaufen.

3. Fahrzeugreifen nach einem der Ansprüche 1 oder 2, **dadurch gekennzeichnet, dass** die zu den Randbereichen verlaufenden Einschnitte (8) einen um höchstens 20° von der Orthogonalen auf die angrenzenden Nuten (3, 4, 10) abweichenden Verlauf besitzen.

4. Fahrzeugreifen nach einem der Ansprüche 1 bis 3, **dadurch gekennzeichnet, dass** die zu den Randbereichen verlaufenden Einschnitte (8) in ihrer Ausrichtung um höchstens 15° von der exakten Fortsetzung der Wabenstruktur abweichen.

5. Fahrzeugreifen nach einem der Ansprüche 1 bis 4, **dadurch gekennzeichnet, dass** die in einem Profilelement (5, 6, 9) zu den Randbereichen verlaufenden Einschnitte (8) eine durchschnittliche Länge besitzen, die zumindest der durchschnittlichen Kantenlänge (s) der Wabenelemente (7a) dieses Profilelementes (5, 6, 9) entspricht.

6. Fahrzeugreifen nach Anspruch 5, **dadurch gekennzeichnet, dass** die durchschnittliche Länge der zu den Randbereichen verlaufenden Einschnitte (8) 110 % bis 230 % der durchschnittlichen Kantenlänge (s) der Wabenelemente (7a) beträgt.

7. Fahrzeugluftreifen nach einem der Ansprüche 1 bis 6, **dadurch gekennzeichnet, dass** das durch die Waben- und die Randelemente (7a, 8a) drei Scharen von zickzackförmigen Einschnittzügen bildende Einschnittgitter eine Schar von Einschnittzügen aufweist, die eine Erstreckungsrichtung besitzen, die der Axialen möglichst nahe kommt und von der Axialen um höchstens 30° abweicht.

8. Fahrzeugluftreifen nach Anspruch 7, **dadurch gekennzeichnet, dass** die Einschnittzüge (15, 16, 19), deren Erstreckungsrichtung der Axialen am nächsten kommt, eine größere Einschnitttiefe aufweisen als jene Einschnitte aus den beiden anderen Scharen von Einschnittzügen, die nicht gleichzeitig Einschnitte aus der erstgenannte Schar von Einschnittzügen (15, 15, 19) sind.

9. Fahrzeugluftreifen nach Anspruch 7 oder 8, **dadurch gekennzeichnet, dass** die durchschnittliche Tiefe der Einschnittzüge (15, 16, 19), deren Erstreckungsrichtung der Axialen am nächsten kommt - unbeschadet eventueller Grundanhebungen in der Nähe ihrer Ränder - zwischen 60 % und 105 %, insbesondere mindestens 80 %, der maximalen Tiefe der Nuten beträgt.

10. Fahrzeugluftreifen nach Anspruch 8 oder 9, **dadurch gekennzeichnet, dass** die durchschnittliche Tiefe jener Einschnitte aus den beiden anderen Scharen von Einschnittzügen, die nicht gleichzeitig Einschnitte aus der Schar von Einschnittzügen (15, 16, 19) sind, deren Erstreckungsrichtung der Axialen am nächsten kommt, - unbeschadet eventueller Grundanhebungen in der Nähe ihrer Ränder - 10 % bis 60 % der maximalen Tiefe der Nuten beträgt.

## Claims

1. Vehicle tyre, in particular for use in winter driving conditions, with a tread rubber profile, which is divided by transverse grooves (4) and by circumferential grooves (3, 10) into profile elements, such as blocks of rows of blocks and ribs running around in the circumferential direction, of which profile elements at least some, preferably all, have a network of indentations, which are arranged in the interior of the profile elements in a honeycomb form, that is to say appear in plan view as at least essentially regular hexagons adjacent to one another, indentations which together with grooves form edge elements running at least to the edge regions that are bounded by circumferential grooves and at least essentially as a continuation of the honeycomb structure from the interior of the profile elements, **characterized in that** profile elements (5, 6, 9) are completely covered by the network of indentations, **in that** indentations (8) run in straight lines from all the corners of the honeycomb elements (8a) that are arranged in the inner region of the profile element (5, 6, 9) to all the edge regions bounded by grooves (3, 4, 10), the edge elements (8a) formed together with the grooves (3, 4, 10) having an average surface area of a size which is between 105% and 140% of the average size of the surface area of the honeycomb elements (7a) arranged in the inner region of the respective profile element (5, 6, 9).

2. Vehicle tyre according to Claim 1, **characterized in that** the indentations (8) running to the edge regions run at least essentially orthogonally in relation to the adjacent grooves (3, 4, 10).

3. Vehicle tyre according to either of Claims 1 and 2, **characterized in that** the indentations (8) running to the edge regions follow a line deviating by at most 20° from the orthogonal to the adjacent grooves (3, 4, 10).

4. Vehicle tyre according to one of Claims 1 to 3, **characterized in that** the indentations (8) running to the edge regions deviate in their alignment by at most 15° from the exact continuation of the honeycomb structure.

5. Vehicle tyre according to one of Claims 1 to 4, **characterized in that** the indentations (8) running in a profile element (5, 6, 9) to the edge regions have an average length which corresponds at least to the average edge length (s) of the honeycomb elements (7a) of this profile element (5, 6, 9).

6. Vehicle tyre according to Claim 5, **characterized in that** the average length of the indentations (8) running to the edge regions is 110% to 230% of the average edge length (s) of the honeycomb elements (7a).

7. Vehicle tyre according to one of Claims 1 to 6, **characterized in that** the grid of indentations forming the honeycomb elements (7a) and edge elements (8a) of three groups of zigzag-shaped lines of indentations has a group of lines of indentations which have a direction of extent which comes as close as possible to the axial and deviates by at most 30° from the axial.

8. Vehicle tyre according to Claim 7, **characterized in that** the lines of indentations (15, 16, 19) with a direction of extent which comes closest to the axial have a greater indentation depth than those indentations from the two other groups of lines of indentations which are not at the same time indentations from the first-mentioned group of lines of indentations (15, 16, 19).

9. Vehicle tyre according to Claim 7 or 8, **characterized in that** the average depth of the lines of indentations (15, 16, 19) with a direction of extent which comes closest to the axial is between 60% and 105%, in particular at least 80%, of the maximum depth of the grooves - notwithstanding possible base elevations in the vicinity of their edges.

10. Vehicle tyre according to Claim 8 or 9, **characterized in that** the average depth of those indentations from the two other groups of lines of indentations which are not at the same time indentations from the group of lines of indentations (15, 16, 19) with a direction of extent coming closest to the axial is 10% to 60% of the maximum depth of the grooves - notwithstanding possible base elevations in the vicinity of their edges.

## Revendications

1. Pneu pour véhicule, destiné en particulier à être utilisé dans des conditions de conduite hivernale, dont le profil de la bande de roulement est divisé par des rainures transversales (4) et par des rainures (3, 10) de pourtour en éléments de profil, par exemple des blocs de rangées de blocs et des nervures qui s'étendent dans la direction du pourtour, au moins certains de ces éléments de profil et de préférence tous présentant un réseau d'incisions qui sont agencées en nid d'abeilles à l'intérieur des éléments de profil, autrement dit qui, vues du dessus, apparaissent sous la forme d'hexagones adjacents les uns aux autres et au moins essentiellement réguliers, des incisions s'étendant de l'intérieur des éléments de profil au moins jusqu'aux régions périphériques contiguës aux rainures de pourtour et au moins essentiellement dans le prolongement de la structure en nid d'abeilles hors des éléments de profil et formant les éléments périphériques avec les rainures, **caractérisé en ce que** les éléments de profil (5, 6, 9) sont complètement recouverts par le réseau d'incisions **en ce que** des incisions rectilignes (8) s'étendent de tous les coins des alvéoles (8a) agencées dans la région intérieure des éléments de profil (5, 6, 9) vers toutes les régions périphériques contiguës aux rainures, la superficie moyenne des éléments périphériques (8a) formés avec les rainures (3, 4, 10) étant comprise entre 105 % et 140 % de la superficie moyenne des alvéoles (7a) agencées dans la région intérieure de chacun des éléments de profil (5, 6, 9).

2. Pneu pour véhicule selon la revendication 1, **caractérisé en ce que** les incisions (8) qui s'étendent jusqu'aux régions périphériques s'étendent au moins essentiellement à la perpendiculaire des rainures adjacentes (3, 4, 10).

3. Pneu pour véhicule selon l'une des revendications 1 ou 2, **caractérisé en ce que** le parcours des incisions (8) qui s'étendent jusqu'aux régions périphériques dévie de 20° au plus de la perpendiculaire aux rainures (3, 4, 10) adjacentes.

4. Pneu pour véhicule selon l'une des revendications 1 à 3, **caractérisé en ce que** l'orientation des incisions (8) qui s'étendent jusqu'aux régions périphériques s'écarte de 15° au plus du prolongement exact de la structure en nid d'abeilles.

5. Pneu pour véhicule selon l'une des revendications 1 à 4, **caractérisé en ce que** la longueur moyenne des incisions (8) d'un élément de profil (5, 6, 9) qui s'étendent jusqu'aux régions périphériques correspond au moins à la longueur moyenne (s) des côtés des alvéoles (7a) de cet élément de profil (5, 6, 9).

6. Pneu pour véhicule selon la revendication 5, **caractérisé en ce que** la longueur moyenne des incisions (8) qui s'étendent jusqu'aux régions périphériques est comprise entre 110% et 230 % de la longueur moyenne (s) des côtés des alvéoles (7a).

7. Pneu pour véhicule selon l'une des revendications 1 à 6, **caractérisé en ce que** le réseau d'incisions qui forme trois ensembles de lignes zigzagantes d'incisions par l'intermédiaire des alvéoles et des éléments périphériques (7a, 8a) présente un ensemble de lignes d'incisions dont la direction d'extension est la plus proche possible de la direction axiale et s'en écarte de 30° au plus.

8. Pneu pour véhicule selon la revendication 7, **caractérisé en ce que** les lignes (15, 16, 19) d'incisions dont la direction d'extension se rapproche le plus de la direction axiale sont plus profondes que toutes celles des deux autres ensembles de lignes d'incisions qui ne sont pas en même temps des incisions de l'ensemble de lignes (15, 16, 19) d'incisions qui vient d'être mentionné.

9. Pneu pour véhicule selon les revendications 7 ou 8, **caractérisé en ce que** la profondeur moyenne des lignes (15, 16, 19) d'incisions dont la direction d'extension se rapproche le plus de la direction axiale est comprise entre 60 % et 105 % de la profondeur maximale des rainures et est en particulier au moins égale à 80 % de celle-ci - compte non tenu d'éventuelles élévations du fond à proximité des bords des incisions.

10. Pneu pour véhicule selon les revendications 8 ou 9, **caractérisé en ce que** la profondeur moyenne de chaque incision des deux autres ensembles de lignes d'incisions qui ne sont pas en même temps des incisions de l'ensemble de lignes (15, 16, 19) d'incisions dont la direction d'extension se rapproche le plus de la direction axiale est comprise entre 10 % et 60 % de la profondeur maximale des rainures - compte non tenu d'éventuelles élévations du fond à proximité des bords des incisions.
